# EUROPEAN PATENT APPLICATION

(11) **EP 2 457 446 A1**
(43) Date of publication of application: **30.05.2012**
(21) Application number: 09847517.1
(22) Date of filing: 24.07.2009
(51) Int. Cl.: A23B 4/023, B65D 81/26, B65D 81/20

(54) **METHOD FOR REMOVING WATER FROM A FOOD**

(71) Applicant: Boades Hernandez-Sonseca, Jordi, 17004 Girona (ES)
(72) Inventor: Boades Hernandez-Sonseca, Jordi, 17004 Girona (ES)
(74) Representative: Morgades y Manonelles, Juan Antonio
(86) International application number: PCT/ES2009/070312
(87) International publication number: WO 2011/009969

(57) **Abstract**

The invention relates to a method for removing water from a (seasoned or unseasoned) food product that may previously have been frozen, it being possible to add ingredients and spices, with salt, and, in particular, without salt in the case of special products. The object of the invention is to make it possible to remove the water contained in a fresh product in a package. Principally, the method comprises wrapping the product in a permeable film, which, in turn, may act as casing, and optionally also in a casing under said permeable film, and then placing, at least in the base of the product, a sequestering layer (e.g. salt and/or other additives added to the salt), and finally closing the product under vacuum in order to remove the water, it being possible for the film to be permeable in one direction (from inside to outside) or permeable in both directions.

## Description

### Object of the Invention:

As stated in the title, this patent application relates to a procedure for removing water from a food product, whose new construction and design features fulfil the purpose for which it has specifically been designed, with the maximum safety and effectiveness, providing numerous advantages, as explained in detail in the present report.

More specifically, the invention refers to a method for removing water from a (seasoned or unseasoned) food product, such as fresh cod, for example -even though it may previously have been frozen. Ingredients and spices can be added, with salt (totally or partially), and, in particular, without salt, for special products. The procedure of the invention essentially consists of wrapping the product in a permeable film, which, in turn, may act as a casing, and optionally also in a casing under the aforementioned permeable film, and then placing a sequestering layer (e.g. salt and/or other additives added to salt) at least on the bottom of the product, and finally vacuum sealing the product in order to remove the water; the film may be permeable in one direction (from inside to outside) or in both directions (from inside to outside and outside to inside).

### State of the Art:

There are other procedures for the production, drying, and curing of food products, for meat products as well as cheese and dairy products, and fish such as salmon, cod, and others, on the market, and they can therefore be considered the state of the art of the invention.

In U.S.A. patent no. 2004/0137116, a "method for processing and preserving food " is described and claimed, comprising operations for placing food in packaging in such a way that the food is in contact in turn with a sheet that is in contact with the aforementioned food and which dries it. The seasonings used are salt, sugar, miso, mirin, soy sauce, and liquor.

Also in PCT patent no. PCT/HU2006/000069, a product and method is shown for packaging fresh food^{w}, which consists of placing fresh food products inside a package, the bottom of which has a layer of filler on it that absorbs moisture, the food and the layer of filling being separated by a perforated sheet, and later vacuum-sealed.

Neither of the two procedures described removes the water contained in a fresh product in a package, but rather they only absorb the water of the product that is released spontaneously, in order to preserve the said fresh product better, leaving it in the aforementioned package.

### Scope of the Invention:

The object of the present invention is to achieve optimal removal of the water contained in a food, namely to obtain an entirely precise degree of moisture, whether said food is seasoned or not, allowing a fresh product to become a prepared product.

The obtaining of optimal removal of the water contained in a food leads directly to a substantial improvement in its preservation and/or its date of expiration; Or to a decrease in dependence on the cold chain for the storage of the same; or to a reduction the amount of salt or even dependence on it, thereby allowing the manufacture of processed foods with very little or no salt; or to improve the sensory properties of the resulting product.

Alternatively, another of the objects of the invention is to have a procedure for removing water from a food product that is quick.

The application of this procedure is aimed at all sorts of foods, such as fish, meat, or vegetables, dairy products, and other derivatives of each type of food mentioned.

### Description of the Invention:

In one of the preferred embodiments of the invention, the procedure for extracting water from any type of food, depending on the type of food and its initial and final degree of moisture, may be carried out according to two different variations: in the first embodiment, a film that is permeable in both directions is used, and in the second, a film that is permeable in only one direction.

The procedure for extracting water from any type of food, according to the first variation (namely, when a film that is permeable in both directions is used) comprises the following phases:
- Optionally, the product can be prepared (whether it is a cut piece of food or not; for example, a piece of cod) with the incorporation of different ingredients, as well as one or more spices, but without salt or with very little of it (less than that required by the product).
- Optionally, said prepared product can be stuffed in a conventional casing or the like, forming what is referred to in the technical sector as "product paste."
- The product paste is wrapped with a permeable film (which can act as casing), said film being permeable in both directions.
- In the part of the base of the product paste wrapped in the film (that is to say, on the bottom part), and also, optionally, wrapped around it, there is a sequestering layer (preferably salt that may be mixed with other additive/s, or if not salt, another type of functionally equivalent sequestering agent).*^{c}*
- The product paste + sequestering agent from the previous phase is vacuum sealed inside a bag or container.
- By the action of the sequestering agent and the film that is permeable in both directions, the sequestering product progressively passes partly into the composition of the product paste, and on the other hand, the water contained in the product paste is progressively passed from the product paste to the sequestering agent, but without absorbing it. This process will last approximately from 1 day to 4 months (depending on the water that is to be extracted). This operation can be repeated as many times as necessary.
- The vacuum-sealed bag or container is opened, and the water contained inside is released. This operation of releasing water may be performed in various ways:
   a) The bag can be opened, and the water contained in it drained, and this operation can be performed as many times as necessary; that is to say, the bag can be vacuum-sealed again so that the sequestering agent can act again.
   b) Alternatively, the vacuum-sealed bag or container may have a valve or tap, which controls the opening/closing of the bag without the need to open the vacuum-sealed bag, so that the water can be released progressively.
   c) Alternatively, on the base of the sequestering agent (that is to say, on the bottom) a new base of absorbent product (such as, for instance, starch) can be added, closing it all in the vacuum-sealed bag or container. In this way, the sequestering agent that extracts the water from the product paste deposits it in the aforementioned absorbent product, so that it greatly facilitates the removal of the water from the sequestering agent.

Advantageously, the inclusion of a shut-off valve into the vacuum-sealed bag or container is intended to facilitate and improve control of the release of the liquids removed from the food at very precise times, and without losing the bag or container's vacuum seal.

The procedure for extracting water from any type of food, according to the second variation (namely, when a film that is permeable in only one direction -from inside to outside- is used) comprises the following phases:
- It is possible to prepare the product (for instance, a piece of cod) choosing to add different ingredients, plus one or more spices, but in this case including the amount of salt required by the product or not, especially intended for users who cannot eat salt (as in this case the sequestering agent doesn't pass to the composition of the product paste, as the film is impermeable from the outside to the inside).
- Optionally, said prepared product can be stuffed in a conventional casing or the like, forming what is referred to in the technical sector as "product paste."
- The product paste is wrapped with a permeable film that can also act as casing, said film being permeable in only one direction, from inside to outside.
- In the part of the base of the product paste wrapped in the film (that is to say, on the bottom part), and also, optionally, wrapped around it, there is a layer of salt or another type of functionally equivalent sequestering agent.
- The product paste + sequestering agent from the previous phase is vacuum sealed inside a bag or container.
- By the action of the sequestering agent and the film that is permeable in one direction, the water contained in the product paste is progressively passed from the product paste to the sequestering agent, but without absorbing it. This process will last approximately from 1 day to 4 months (depending on the amount of water that is to be extracted). This operation can be repeated as many times as necessary.
- The vacuum-sealed bag or container is opened, the water contained inside is released and the desired product is achieved. This operation of releasing water may be performed in the same way as in the first procedure.

Once these preparation processes are finished, we will have obtained the product with the degree of moisture suitable for completing it with other additional processes or for later sale.

Alternatively, the phase of closing the product paste + sequestering agent on the inside of a vacuum-sealed bag or container can be done in such a way that more than one product paste + sequestering agent is placed on the inside of each vacuum-sealed bag or container. In this way, a single vacuum-sealed bag or container can be used to hold more than one product paste + sequestering agent, thus reducing the cost of manufacture of the product unit.

Regarding the film that is permeable in only one direction, such as, for example, a "P-plus" commercial film, among others, or materials with a membrane or valve.

Regarding the aforementioned sequestering agent, it will be possible to choose potassium citrate to add to salt, among other things.

Below is a detailed list of the main parts of the invention, which are shown with an identifying number in the attached drawings; (11) film, (12) layer of salt, (13) casing, (14) product paste, (15) vacuum container, (17) cover of the vacuum container (15), (18) valve, (19) layer of absorbent product, (20) vacuum-sealed bag, (21) water extracted from the container.

Other details and characteristics shall be shown throughout the description below referring to drawings attached to this report which are shown for illustrative but not limiting purposes only in a drawing of the invention.

### Description of the drawings:

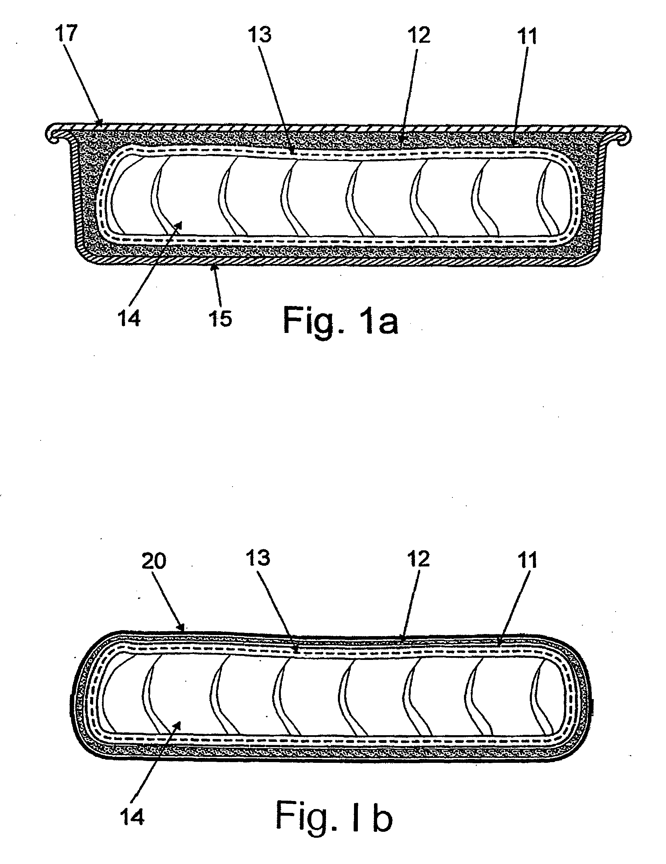

Figure 1 is a front side-view diagram of the result of applying all the layers and elements involved in the procedure recommended here according to the first variation to a piece of food (14), using a vacuum-sealed container (15) in figure 1a with its cover (17), and in figure 1b, a vacuum-sealed bag (20).

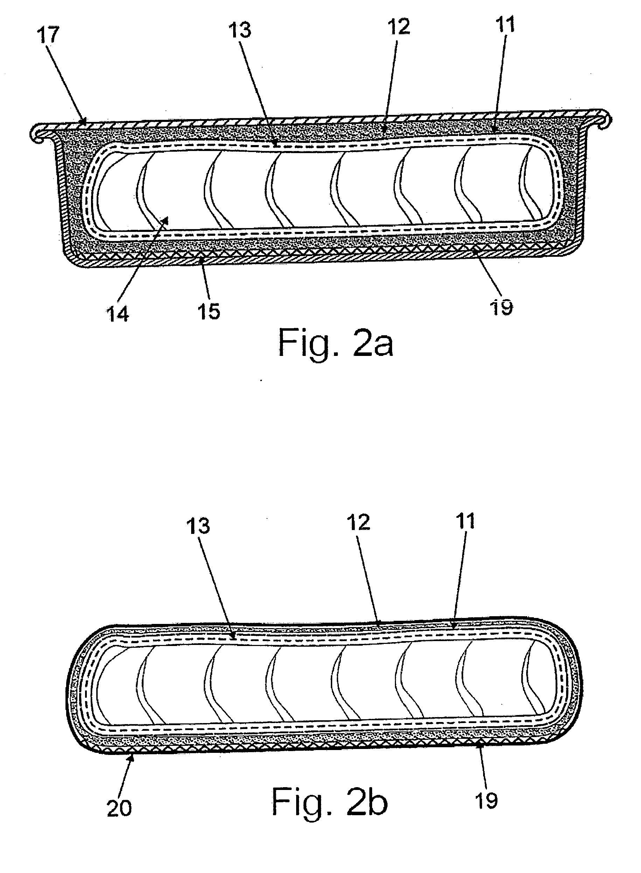

Figures 2a and 2b are two front side-view diagrams of the result of applying all the layers and elements involved in the procedure recommended here according to the second variation to a piece of food (14), with an outside layer of absorbent product (19) foreseen between the film (11) and the vacuum container (15) or vacuum-sealed bag (20).

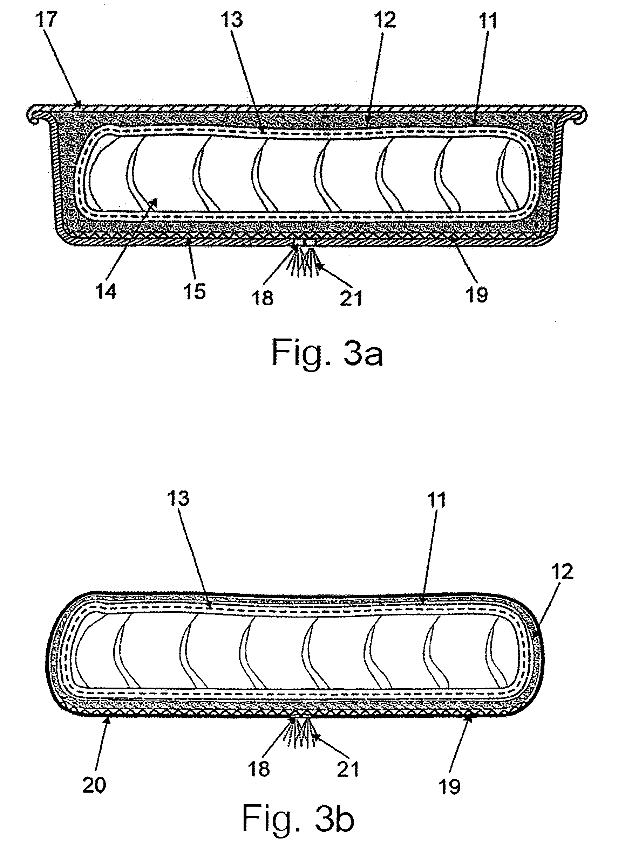

Figures 3a and 3b are two front side-views in a diagram of the result of applying all the layers and elements involved in the procedure recommended here according to the first variation to a piece of food (14), including a valve (18) to release the water removed (21) from the piece of food (14).

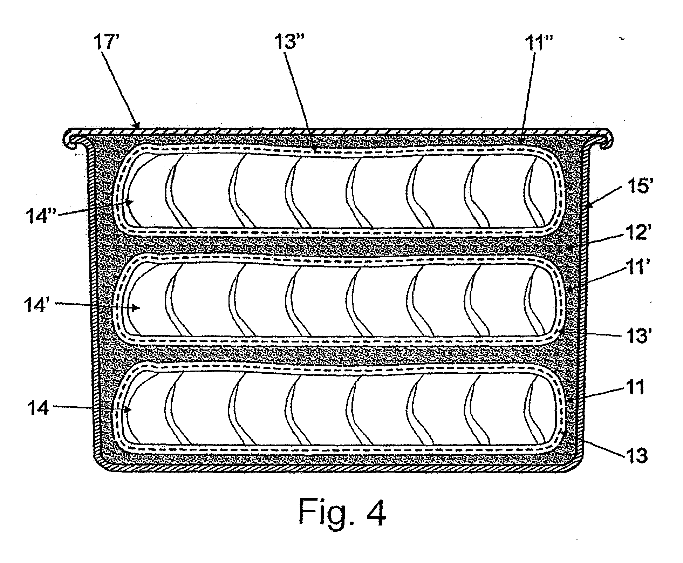

Figure 4 represents a front side-view of a last diagram of the result of applying all of the layers and elements involved in the procedure described here according to the first variation to more than one product paste (14), but with a vacuum-sealed container (15') that contains three different product pastes + sequestering agent (14, 14', 14").

### Description of a preferred embodiment of the invention:

In one of the preferred embodiments of the invention, and as shown in figures 1a and 1b, the procedure for removing water from a food product is begun after having prepared the food product (14), that is to say, having cleaned it, cut up its inedible parts, seasoned or not, with the addition of natural ingredients, all without the aid of salt or with very little salt, and it may be wrapped in a casing.

In a third phase, the prepared product paste is wrapped in a film that is permeable in only one direction. This film may also act as casing.

In a fourth phase, there is a layer of salt or another equivalent sequestering agent (12) (optionally adding other additive/s) at least on the lower side or base of the product paste, and also around the outer surface of the product paste(14).

In a fifth phase, the whole set is arranged: The food (cut up or not) (14), wrapped in a casing (13), wrapped in a film (11), wrapped in a layer of salt (12) in a bag (20) or container (15) and finally vacuum-sealed.

The procedure described above ends, after a certain resting time has passed, with the opening of the vacuum-sealed bag (20) or container (15), to release the water extracted from the product (14).

Optionally, and according to the nature of the food to be handled or, more precisely, depending on the degree of moisture required, the procedure described above continues with successive phases of vacuum-sealing the product (14) with a new bag (20') or container (15 ').

Another option is foreseen, in which the bag (12) or container (15), with its cover (17), has a valve (18), located on the lower part of the container (15) or the bag (12), allowing the removal of the water through the valve (18) without losing the vacuum seal on the inside of the container (15) or bag (12), and without having to vacuum seal again using a new bag (20') or container (15'), see figures 3a and 3b.

A second choice for the procedure consists of adding an absorbent base (19) under the base of the sequestering agent (12), for instance a starch or functionally equivalent product, as shown in figures 2a and 2b.

Having sufficiently described this invention using the figures attached, it is easy to understand that any modification may be made which may be deemed to be appropriate, whenever these changes do not alter the essence of the invention summarised in the following claims.

## Claims

1. - "PROCEDURE FOR **REMOVING WATER FROM FOOD", characterised in that** it comprises the following phases:
- Optionally, the product can be prepared (whether it is a cut piece of food or not) with the incorporation of different ingredients, as well as one or more spices, and optionally salt (even it may be without salt, with very little of it or less than that required by the product).
- Optionally, said prepared product can be stuffed in a conventional casing or the like, forming the "product paste."
- The product paste is wrapped with a permeable film, said film being permeable in both directions or in only one direction (from inside to outside), which can also act as casing.
- In at least one part of the base (bottom) of the product paste wrapped in the film, and optionally also around it, a sequestering layer will be placed.
- The product paste and the sequestering agent from the previous phase is vacuum sealed inside a bag or container.
- By the action of the sequestering agent and the permeable film, the water contained in the product paste will progressively pass over from the product paste into the sequestering agent itself, but without absorbing it, and if the film is permeable in both directions, the sequestering agent will also pass progressively in part to the composition of the product paste, this phase lasting approximately from 1 day to 4 months.
- The vacuum-sealed bag or container is opened, the water contained inside is released and the desired product is achieved.

2. - "PROCEDURE FOR **REMOVING** WATER FROM A **FOOD"** according to the claim one, **characterised in that** the water may be released as many times as necessary; that is to say, the bag or container can be vacuum-sealed again so that the sequestering agent acts again, or it can be replaced by a new vacuum-sealed bag or container, with a new sequestering agent.

3. - "PROCEDURE FOR **REMOVING** WATER FROM A **FOOD"** according to the claim one, **characterised in that** the releasing of water may be carried out using a shut-off valve or tap placed underneath the vacuum-sealed bag or container, which is designed to control the opening/closing of the bag or container without the need to open it and alter the vacuum sealing of the bag or container.

4. - "PROCEDURE FOR **REMOVING** WATER FROM A **FOOD**" according to the claim one, **characterised in that** additionally, after the phase of arranging a layer of salt (optionally adding other additive/s) or another type of functionally equivalent agent at least on the base of the product paste wrapped in the film, another absorbent product is added underneath, so that during the resting phase, the sequestering agent that extracts the water from the product paste deposits it on the aforementioned absorbent product.

5. - "PROCEDURE FOR **REMOVING** WATER FROM A **FOOD**" according to the claim four, **characterised in that** the absorbent product could be starch or something similar.

6. - "PROCEDURE FOR **REMOVING** WATER FROM A **FOOD**" according to the claim one, **characterised in that** salt or potassium citrate will be chosen as a sequestering agent.

7. - "PROCEDURE FOR **REMOVING** WATER FROM A **FOOD**" according to the claim one, **characterised in that** only salt will be chosen as the sequestering agent.

8. - "PROCEDURE FOR **REMOVING** WATER FROM A **FOOD**" according to the claim one, **characterised in that** the phase of closing the product paste and the sequestering agent on the inside of a vacuum-sealed bag or container can be done in such a way that more than one product paste + sequestering agent is placed on the inside of each vacuum-sealed bag or container.

## Amended claims

### Amended claims in accordance with Rule 137(2) EPC.

**1.** - "PROCEDURE FOR REMOVING WATER FROM FOOD", **characterised in that** it comprises the following phases:
- Optionally, the product can be prepared (whether it is a cut piece of food or not) with the incorporation of different ingredients, as well as one or more spices, and optionally salt (even it may be without salt, with very little of it or less than that required by the product).
- Optionally, said prepared product can be stuffed in a conventional casing or the like, forming the "product paste."
- The product paste is wrapped with a permeable film, said film being permeable in both directions or in only one direction (from inside to outside), which can also act as casing.
- In at least one part of the base (bottom) of the product paste wrapped in the film, and optionally also around it, a sequestering layer will be placed, which can either be salt or potassium citrate.
- The product paste and the sequestering agent from the previous phase is vacuum sealed inside a bag or container.
- By the action of the sequestering agent and the permeable film, the water contained in the product paste will progressively pass over from the product paste into the sequestering agent itself, but without absorbing it, and if the film is permeable in both directions, the sequestering agent will also pass progressively in part to the composition of the product paste, this phase lasting approximately from 1 day to 4 months.
- The vacuum-sealed bag or container is opened, the water contained in the vacuum-sealed bag or container is released, this being done using a shut-off valve or tap placed in the bottom part of the vacuum-sealed bag or container, which is designed to control the opening/closing of the bag or container without needing to open it and alter the vacuum seal of the bag or container, obtaining the desired product.

**2.** - "PROCEDURE FOR REMOVING WATER FROM A FOOD" according to the claim one, **characterised in that** the water may be released as many times as necessary; that is to say, the bag or container can be vacuum-sealed again so that the sequestering agent acts again, or it can be replaced by a new vacuum-sealed bag or container, with a new sequestering agent.

**3.** - "PROCEDURE FOR REMOVING WATER FROM A FOOD" according to the claim one, **characterised in that** additionally, after the phase of arranging a layer of salt (optionally adding other additive/s) or another type of functionally equivalent agent at least on the base of the product paste wrapped in the film, another absorbent product is added underneath, so that during the resting phase, the sequestering agent that extracts the water from the product paste deposits it on the aforementioned absorbent product.

**4.** - "PROCEDURE FOR REMOVING WATER FROM A FOOD" according to the claim three, **characterised in that** the absorbent product could be starch or something similar.

**5.** - "PROCEDURE FOR REMOVING WATER FROM A FOOD" according to the claim one, **characterised in that** only salt will be chosen as the sequestering agent.

**6.** - "PROCEDURE FOR REMOVING WATER FROM A FOOD" according to the claim one, **characterised in that** the phase of closing the product paste and the sequestering agent on the inside of a vacuum-sealed bag or container can be done in such a way that more than one product paste + sequestering agent is placed on the inside of each vacuum-sealed bag or container.
